# EUROPEAN PATENT APPLICATION

(11) **EP 2 905 324 A1**
(43) Date of publication of application: **12.08.2015**
(21) Application number: 13843179.6
(22) Date of filing: 02.08.2013
(51) Int. Cl.: C11C 3/00, A23D 9/00, C11B 3/16, C11B 7/00

(54) **OIL OR FAT COMPOSITION AND METHOD FOR PRODUCING SAME**

(30) Priority: 04.10.2012 JP 2012222447
(71) Applicant: J-Oil Mills, Inc., Tokyo 104-0044 (JP)
(72) Inventor: SADAKANE, Tadayoshi, Tokyo 104-0044 (JP); HARA, Yusuke, Tokyo 104-0044 (JP); YAMAGUCHI, Takashi, Tokyo 104-0044 (JP); TSUTSUMI, Keisuke, Tokyo 104-0044 (JP)
(74) Representative: Gallego Jiménez, José Fernando
(86) International application number: PCT/JP2013/070993
(87) International publication number: WO 2014/054335

(57) **Abstract**

[Problem] To provide: a novel oil or fat composition, particularly an oil or fat composition having excellent heating resistance; and a method for producing the oil or fat composition.

[Solution] The oil or fat composition according to the present invention comprises (I) a palm-based fractionated oil or fat in which the ratio of the content of tripalmitin relative to the content of triglyceride is 70 to 90 wt% and the ratio of the content of unsaturated fatty acids relative to the total content of all of fatty acids is 1 to 8 wt% and (II) a base oil having a melting point of lower than 10°C, wherein the content of the component (I) is 0.05 to 15 wt% relative to the whole weight of the oil or fat composition and the content of the component (II) is 85 to 99.95 wt% relative to the whole weight of the oil or fat composition.

## Description

### Technical Field

The present invention relates to a novel oil or fat composition and a method for producing the same. More specifically, the present invention relates to an oil or fat composition having excellent heating resistance so that the constituent oils or fats are inhibited from experiencing deterioration, particularly elevation in the acid values and heat discoloration, in cooking, and a method for producing the same.

### Background

As oils for use in deep frying to make foods such as deep-fried food and tempura, edible oils or fats such as soybean oil, rape seed oil, and palm oil are used alone or as a mixture of these. In cooking food ingredients by adding them to an edible oil or fat that is heated to high temperatures, namely, in deep frying, the edible oil or fat deteriorates in various ways due to oxygen, heat, moisture, substances eluted from the food ingredients, and the like. Heating an oil or fat facilitates reactions such as thermal oxidation, thermal decomposition, thermal polymerization, and hydrolyzation of the oil or fat to cause discoloration, elevation in the acid value, viscosity build-up, and odor resulting from heating. Since a deteriorated oil or fat spoils the cooking environment and the quality of the resulting deep-fried food, the oil or fat cannot be used for long hours.

For the purpose of improving the thermal stability of an oil or fat, suggestions have been made to formulate emulsifiers and the like, employ transesterification approaches, and suitably control the fatty acid composition of the oil seed by hybridization, mutation, genetic modification, and the like. However, these techniques are expensive and, when employed, can create requirements for labelling of additives and the like.

A prior art approach to inhibit heat discoloration at the time of deep frying with a liquid oil is to apply more stringent refining conditions in order to remove, to the extent possible, substances known to promote heat deterioration of oils, such as phospholipids and Fe. However, refining conditions currently applied to liquid oils are already stringent and further stringent refining conditions can damage oils.

In order to inhibit heat deterioration, incorporation of a trace amount of phosphorus in an oil or fat is suggested. For example, Patent Document 1 suggests a method for producing a deep frying oil or fat composition excellent in heating resistance at 180°C, the method including incorporating at least one phosphorus-derived component selected from crude oils or fats and intermediate crude oils or fats to a refined edible oil or fat so as to achieve a phosphorus content of 0.1 to 5.0 ppm (Patent Document 1). This method can give an oil or fat composition that is to cause minor heat discoloration and odor resulting from heating. Patent Document 2 suggests a deep frying oil or fat composition characterized by containing not lower than 0.1 ppm and not higher than 10 ppm of phosphorus and not lower than 2 ppm and not higher than 130 ppm of ascorbic acid and/or an ascorbic acid derivative as an ascorbic acid equivalent. This oil or fat composition is to cause minor heat discoloration and odor resulting from heating when used in cooking and is also to cause minor elevation in the acid value, and therefore can withstand use for long hours.

### Citation List

### Patent Literature

Patent Document 1: Japanese Patent No. 4159102
Patent Document 2: Japanese Patent No. 4713673

### Summary

### Technical Problem

An object of the present invention is to provide a novel oil or fat composition based on a technical idea different from the ones in prior arts, particularly an oil or fat composition having excellent heating resistance as a deep frying oil or fat, and a method for producing the same.

### Solution to Problem

The inventors of the present invention have conducted intensive research to achieve the object above and, as a result, have found that the following invention can achieve the object. The present invention provides an oil or fat composition having excellent heating resistance, comprising:
(I) a palm-based fractionated oil or fat in which the ratio of the content of tripalmitin relative to the content of triglyceride is 70 to 90 wt%,
   the ratio of the content of unsaturated fatty acids relative to the total content of all of fatty acids is 1 to 8 wt%, and
   the ratio of the content of tripalmitin relative to the content of tri-saturated fatty acid triglyceride (weight of tripalmitin/weight of tri-saturated fatty acid triglyceride x 100 (wt%)) is 84 to 95 wt%, and
(II) a base oil having a melting point lower than 10°C,
wherein the content of the component (I) relative to the whole weight of the oil or fat composition is 0.05 to 15 wt%, and
the content of the component (II) relative to the whole weight of the oil or fat composition is 85 to 99.95 wt%.

In the component (I), the triglyceride containing unsaturated fatty acid content to triglyceride (weight of triglyceride containing unsaturated fatty acid/weight of triglyceride x 100 (wt%)) is preferably 0.5 to 18 wt%.

The component (I) consists of, for example, a hard part obtained by subjecting a palm fractionated hard part in slurry form serving as a raw material to further fractionation by crystallization at a hard part yield of not higher than 26 wt%. The hard part yield refers to (weight of hard part)/(weight of hard part + weight of liquid part) x 100 (wt%).

The palm fractionated hard part is preferably palm super stearin with an iodine value of 10 to 17.

The crystallization in fractionation preferably gives a slurry SFC of not higher than 20 wt%. The slurry SFC refers to a solid content in an oil or fat slurry after crystallization and before filtration (weight of solid fat/weight of oil or fat slurry x 100 (wt%)).

The fractionation preferably gives a ratio of hard part yield/slurry SFC of not higher than 20.

The present invention also provides a method for producing an oil or fat composition, including adding, to (II) a base oil having a melting point lower than 10°C, 0.05 to 15 wt% of (I) a palm-based fractionated oil or fat in which the ratio of the content of tripalmitin relative to the content of triglyceride is 70 to 90 wt%,
the ratio of the content of unsaturated fatty acids relative to the total content of all of fatty acids is 1 to 8 wt%, and
the ratio of the content of tripalmitin relative to the content of tri-saturated fatty acid triglyceride is 84 to 95 wt%.

The present invention also provides a method for inhibiting elevation in the acid value of an oil or fat composition, including adding, to (II) a base oil having a melting point lower than 10°C, 0.05 to 15 wt% of (I) a palm-based fractionated oil or fat in which the ratio of the content of tripalmitin relative to the content of triglyceride is 70 to 90 wt%,
the ratio of the content of unsaturated fatty acids relative to the total content of all of fatty acids is 1 to 8 wt%, and
the ratio of the content of tripalmitin relative to the content of tri-saturated fatty acid triglyceride is 84 to 95 wt%.

The present invention also provides a method for inhibiting heat discoloration of an oil or fat composition, including adding, to (II) a base oil having a melting point lower than 10°C, 0.05 to 15 wt% of (I) a palm-based fractionated oil or fat in which the ratio of the content of tripalmitin relative to the content of triglyceride is 70 to 90 wt%,
the ratio of the content of unsaturated fatty acids relative to the total content of all of fatty acids is 1 to 8 wt%, and
the ratio of the content of tripalmitin relative to the content of tri-saturated fatty acid triglyceride is 84 to 95 wt%, under a condition that the content of the component (I) is larger than 3 wt% in the case where the component (II) consists of rape seed oil. In the present invention, heat discoloration refers to discoloration of an oil or fat observed after placing the oil or fat at a temperature ranging from 180 to 260°C for 5 to 100 hours.

Japanese Unexamined Patent Application Publication No. 2006-025671 (JP 2006-025671 A) discloses in Comparative Example 3 a roll-in oil or fat composition that contains 3 parts by weight of an oil or fat 3 (containing 96.3% of SSS, 78.1% of PPP, 2.7% of POP, 1.2% of PPO, lower than 0.1 % of OPO, and lower than 0.05% of monoglyceride) and 89 parts by weight of liquid soybean oil. This oil or fat composition, however, differs from the oil or fat composition of the present invention in that the ratio of the content of tripalmitin (PPP) relative to the content of tri-saturated fatty acid triglyceride (SSS) in the oil or fat 3 is outside the range defined in the present invention. In addition, Japanese Unexamined Patent Application Publication No. 2006-025671 (JP 2006-025671 A) has no description about the excellent heating resistance of the oil or fat composition of the present invention.

### Advantageous Effects of Invention

The oil or fat composition of the present invention has long-term heating resistance at a high temperature of 180°C or higher. The heating resistance includes the properties to inhibit elevation in the acid value and inhibit heat discoloration. Therefore, the oil or fat composition of the present invention is suitably used as a deep frying oil or fat.

### Brief Description of the Drawings

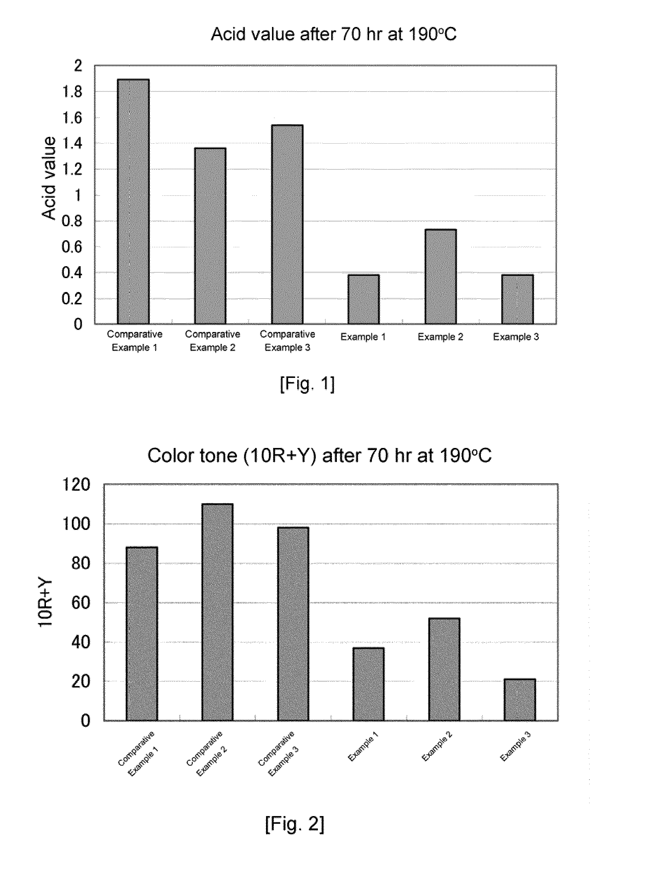

Fig. 1 is a comparison between the acid values of oil or fat compositions of the present invention (Examples 1 to 3) and the acid values of a base oil alone (Comparative Example 1) and oil or fat compositions outside the scope of the present invention (Comparative Examples 2 and 3), after maintained at 190°C for 70 hours. Elevation in the acid values of the oil or fat compositions of the present invention after maintained at 190°C for 70 hours is remarkably inhibited compared to the cases of the base oil of Comparative Example 1 and the oil or fat compositions of Comparative Examples 2 and 3.
Fig. 2 is a comparison of the color tones of oil or fat compositions of the present invention after maintained at 190°C for 70 hours. Heat discoloration of the oil or fat compositions of the present invention after maintained at 190°C for 70 hours is remarkably inhibited compared to the cases of a base oil of Comparative Example 1 and the oil or fat compositions of Comparative Examples 2 and 3.

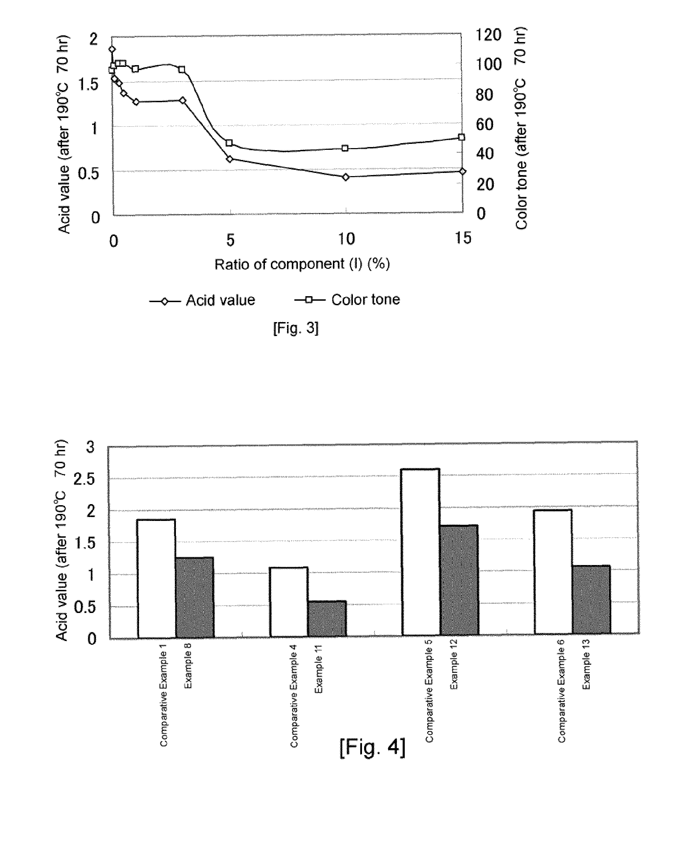

Fig. 3 is a graph showing a correlation between the PTS contents in oil or fat compositions of the present invention (abscissa) and the acid values (left ordinate) or the color tones (right ordinate) of the oil or fat compositions after maintained at 190°C for 70 hours. Elevation in the acid values of the oil or fat compositions containing rape seed oil as a base oil is inhibited by addition of not lower than 0.1 wt% of the component (I) and is remarkably inhibited by addition of more than 3 wt% of the component (I). Heat discoloration remarkably occurs when more than 3% of the component (I) is added.
Fig. 4 is a graph showing elevation in the acid values of oil or fat compositions of the present invention (content of (I) component: 3 wt%) containing different base oils after maintained at 190°C for 70 hours. The effects to inhibit elevation in the acid values of the oil or fat compositions are remarkably displayed when the base oil is changed from rape seed oil (Comparative Example 1 and Example 8) to soybean oil (Comparative Example 4 and Example 11), to palm olein having a melting point of 8.4°C (Comparative Example 5 and Example 12), or to a mixed oil of these (Comparative Example 6 and Example 13).

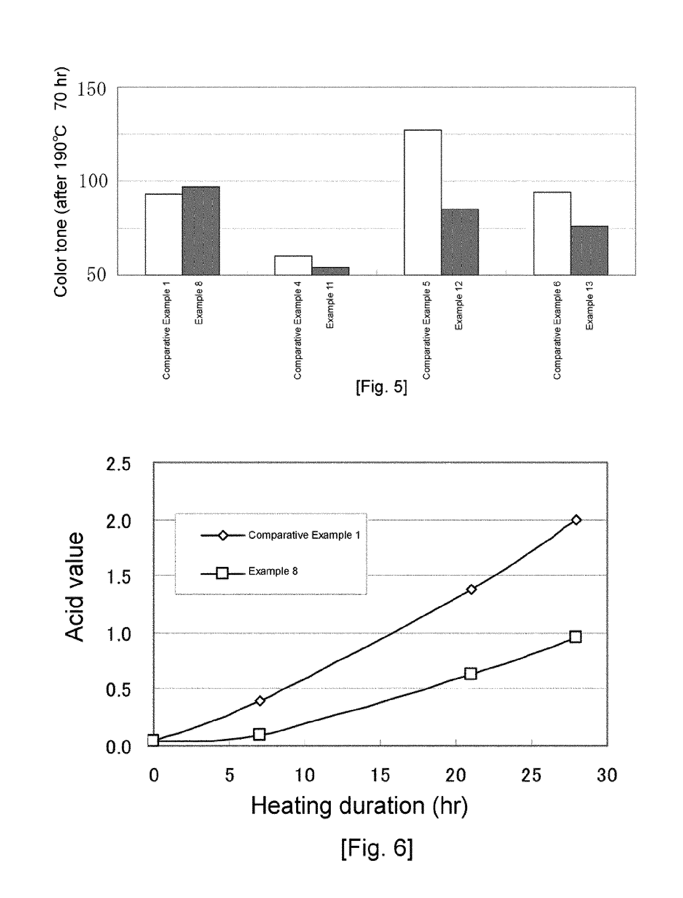

Fig. 5 is a graph showing heat discoloration of oil or fat compositions of the present invention (content of (I) component: 3 wt%) containing different base oils after maintained at 190°C for 70 hours. The effects to inhibit heat discoloration of the oil or fat compositions are remarkably displayed when the base oil is changed from rape seed oil to soybean oil, to palm olein having a melting point of 8.4°C, or to a mixed oil of these. When the base oil is soybean oil, the palm olein, or a mixed oil of rape seed oil, soybean oil, and the palm olein, heat discoloration is significantly inhibited even when the content of the component (I) is 3%.
Fig. 6 is a graph showing elevation in the acid values of an oil or fat composition of the present invention and its base oil in a heating test on a ceramic dish. Fig. 6 shows that the test on a ceramic dish exhibits the same behavior as observed in a simplified heating test.

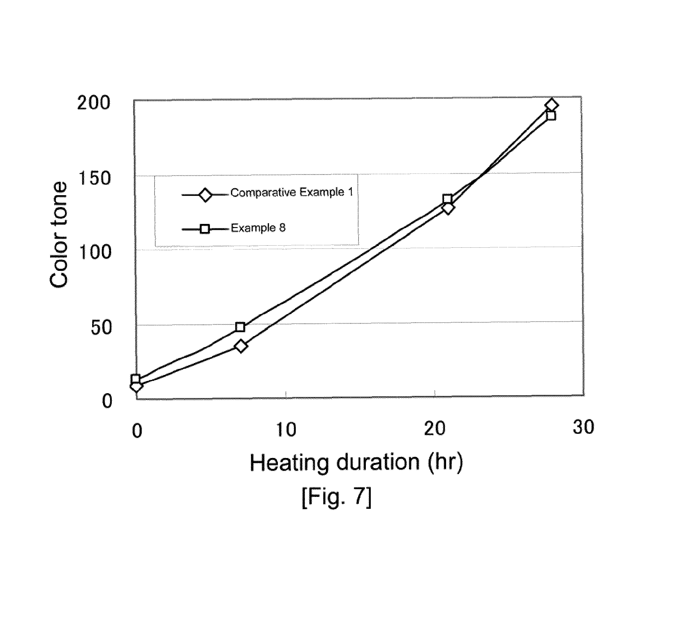

Fig. 7 is a graph showing heat discoloration of an oil or fat composition of the present invention and its base oil in a heating test on a ceramic dish. Fig. 7 shows that the test on a ceramic dish exhibits the same behavior as observed in a simplified heating test.

### Detailed Description

Embodiments of the oil or fat composition of the present invention will be explained in detail below. The present invention provides an oil or fat composition comprising (I) a particular palm-based fractionated oil or fat, and (II) a specific base oil. The component (I) and the component (II) will be explained in turn.

The component (I) can be obtained from a palm-based oil or fat serving as a raw oil or fat. Examples of the raw oil or fat include palm oil and palm fractionated oils such as palm stearin and palm super stearin obtained by fractionation of palm oil. A preferable raw oil or fat is palm super stearin with an iodine value of 10 to 17.

The oil or fat as the component (I) is further specified by certain ranges of the ratio of the content of tripalmitin and the ratio of the content of unsaturated fatty acids. The ratio of the content of tripalmitin (hereinafter, may be called a PPP ratio) is represented by weight of tripalmitin/weight of triglyceride x 100 (wt%). The triglycerides in the oil or fat can be analyzed in conformance with A.O.C.S. Official Method Ce 5-86. In the present invention, the ratio of the content of tripalmitin is 70 to 90 wt% and is preferably 78 to 90 wt%. A PPP ratio lower than 70 wt% may promote heat discoloration, while a palm-based fractionated oil or fat with a PPP ratio exceeding 90 wt% is difficult to industrially obtain by fractionation. The unsaturated fatty acids contained in the palm-based fractionated oil or fat are oleic acid (18:1), linoleic acid (18:2), and linolenic acid (18:3). Constituent fatty acids such as these can be analyzed in conformance with A.O.C.S. Official Method Ce 1h-05 (2005). The ratio of the content of unsaturated fatty acids is represented by the weight of unsaturated fatty acids/the total weight of all of fatty acids x 100 (wt%). In the present invention, the ratio of the content of unsaturated fatty acids is 1 to 8 wt%, preferably 1 to 7 wt%, and more preferably 1 to 6 wt%. A palm-based fractionated oil or fat with a ratio of the content of unsaturated fatty acids of lower than 1 wt% is difficult to industrially obtain by fractionation, while a ratio of the content of unsaturated fatty acids exceeding 8 wt% may promote heat discoloration.

The ratio of the content of tripalmitin relative to the content of tri-saturated fatty acid triglyceride (weight of tripalmitin/weight of tri-saturated fatty acid triglyceride x 100 (wt%)) in the component (I) is 84 to 95 wt%, preferably 85 to 95 wt%, more preferably 86 to 95 wt%, and further preferably 86 to 92 wt%. The tri-saturated fatty acid triglyceride refers to a triglyceride in which each of its three fatty acids is a saturated fatty acid. When the ratio is lower than 84 wt%, heat discoloration may be promoted, while a palm-based fractionated oil or fat in which the ratio exceeds 95 wt% is difficult to industrially obtain by fractionation.

The triglyceride containing an unsaturated fatty acid content in the palm-based fractionated oil or fat of the component (I) is represented by the weight of triglyceride containing unsaturated fatty acid/the weight of triglyceride x 100 (wt%). The lower limit to the ratio is preferably 0.5 wt%, more preferably 1 wt%, and particularly preferably 4 wt% from the productivity viewpoint, while the upper limit to the ratio is preferably 18 wt% and more preferably 16 wt% from the viewpoint of heat discoloration. A palm-based fractionated oil or fat in which the ratio is lower than 0.5 wt% may give a low yield in the production, leading to low production efficiency. On the other hand, when the ratio exceeds 18 wt%, heat discoloration may be promoted.

Constituents of the oil or fat as the component (I) except for the tripalmitin and the unsaturated fatty acid vary depending on the raw oil or fat. Table 1 shows the composition, before and after fractionation, of palm super stearin serving as a raw oil or fat.

**Table 1**

| Composition | Palm super stearin (wt%) | Palm-based fractionated oil or fat (wt%) |
|---|---|---|
| C12:0 | 0 - 0.2 | 0 - 0.1 |
| C14:0 | 0.9 - 1.4 | 0.5 - 1.0 |
| C16:0 | 75.0 - 84.0 | 84.0 - 94.0 |
| C18:0 | 4.0 - 5.0 | 3.0 - 4.5 |
| C18:1 | 7.5 - 15.0 | 1.0 - 7.5 |
| C18:2 | 1.2 - 3.0 | 0.1 - 1.5 |
| C18:3 | 0 - 0.2 | 0.0 - 0.1 |
| C20:0 | 0.2 - 0.4 | 0.1 - 0.4 |
| Saturated fatty acid content | 82 - 92 | 92 - 99 |
| Unsaturated fatty acid content | 8 - 18 | 1 - 8 |

The oil or fat as the component (I) is obtained by the following process, for example. First, palm super stearin with an iodine value of 10 to 17 serving as a raw material is melted at the melting temperature thereof or higher, and then the temperature of the resultant is gradually lowered to cause crystallization that achieves a slurry SFC of not higher than 20 wt%, preferably 0.2 to 18 wt%, more preferably 0.2 to 10 wt%, further preferably 0.2 to 5 wt%, and most preferably 0.2 to 2 wt%. When the slurry SFC exceeds 20%, the effect to enhance heating resistance may be reduced. Fractionation follows to achieve a hard part yield of not higher than 26 wt%, preferably 0.3 to 25 wt%, and further preferably 1.0 to 15 wt%. The fractionation is carried out by pressure filtration with a filter press or a belt press, for example. When the hard part yield exceeds 26 wt%, the effect to enhance heating resistance may be reduced.

The fractionation gives a ratio of hard part yield/slurry SFC of preferably not higher than 20, further preferably not higher than 10, and particularly preferably 1 to 9. With the ratio of hard part yield/slurry SFC being not higher than 20, production of a palm-based fractionated oil or fat can proceed consistently.

The fractionation may be carried out by dry fractionation or solvent fractionation either of which is a known method. Examples of the solvent to be used include acetone and n-hexane.

The oil or fat as the component (I) may be a single oil or a mixture of two or more oils.

The content of the oil or fat as the component (I) relative to the whole weight of the oil or fat composition is 0.05 to 15 wt%, preferably 0.2 to 15 wt%, more preferably 1 to 15 wt%, and particularly preferably 1 to 12 wt%. When the content of the component (I) is lower than 0.05 wt%, heating resistance may not be adequately exhibited, while when the content of the component (I) exceeds 15 wt%, too many crystals may be deposited to spoil the handling properties.

The content of the component (I) is preferably larger than 3 wt% when the component (II) consists of rape seed oil. This inhibits not only elevation in the acid value but also heat discoloration of the oil or fat composition.

The base oil as the component (II) is an edible oil or fat having a melting point lower than 10°C. The base oil can be a single edible oil or fat or a combination of two or more edible oils or fats. In the present specification, the melting point refers to a rising melting point. The rising melting point can be measured in conformance with Standard Methods for the Analysis of Fats, Oils and Related Materials 3.2.2.2-1996.

Specific examples of the edible oils or fats include soybean oil, rape seed oil, palm-based oils or fats having a melting point lower than 10°C, rice oil, corn oil, cottonseed oil, safflower oil, sunflower oil, olive oil, and sesame seed oil. The base oil may contain an edible oil or fat having a melting point of 10°C or higher.

The palm-based oils or fats having a melting point lower than 10°C include palm fractionated oils and processed oils or fats obtained by subjecting palm oil to 2 or more treatments selected from fractionation, transesterification, and hydrogenation. The palm fractionated oils having a melting point lower than 10°C include palm olein and the like.

The base oil as the component (II) is preferably soybean oil, rape seed oil, and/or a palm-based oil having a melting point lower than 10°C, more preferably soybean oil, a palm-based oil having a melting point lower than 10°C, or an edible oil or fat containing not lower than 25 wt% of a palm-based oil having a melting point lower than 10°C, and further preferably an edible oil or fat in which the total content of soybean oil and a palm-based oil having a melting point lower than 10°C is not lower than 60 wt%.

The content of the component (II) relative to the whole weight of the composition is 85 to 99.95 wt%, preferably 85 to 99.8 wt%, more preferably 85 to 99 wt%, and particularly preferably 88 to 99 wt%. When the content of the component (II) is lower than 85 wt%, too many crystals may be deposited to spoil the handling properties, while when the content exceeds 99.5 wt%, heating resistance may not be adequately exhibited.

Depending on the applications of the oil or fat composition, the oil or fat composition as the component (I) can contain, in addition to the components (I) and (II), a component (III) that is an additive known in the art provided that the effects of the present invention are not impaired.

Examples of the component (III) include phosphorus-containing compounds such as phospholipids, phosphoric acid, and phosphates; emulsifiers such as lecithin, glycerol fatty acid esters, sorbitan fatty acid esters, propylene glycol fatty acid esters, sucrose fatty acid esters, and polyglycerol fatty acid esters; antioxidants such as tocopherol, catechins, ascorbic acid, ascorbyl palmitate, sodium ascorbyl phosphate, magnesium ascorbyl phosphate, and ascorbyl tetrahexyldecanoate; thickeners and stabilizers such as pectin, carrageenan, xanthan gum, carboxymethylcellulose (CMC), guar gum, gum arabic, locust bean gum, karaya gum, tamarind gum, tara gum, furcellaran, soda caseinate, alginates, agar-agar, gum elemi, gum Canada, and gum damar; colorants; flavors such as milk flavor, vanilla flavor, and vanilla essence; sugars such as glucose, maltose, sucrose, lactose, trehalose, maltotriose, palatinose, reduced palatinose, xylitol, erythritol, maltitol, sorbitol, isomerized corn syrup, and starch syrup; common salt; and dairy products such as whole milk powder, buttermilk, fermented milk, nonfat milk powder, whole sweetened condensed milk, nonfat sweetened condensed milk, and fresh cream, milk fat, and milk fat preparations. The oil or fat composition of the present invention can be obtained by mixing a predetermined proportion of the components (I) and (II) and, as needed, the component (III). These components may be mixed all at once, or the component (I) may be mixed with part of the component (II) and then mixed with the rest of the component or components.

The oil or fat composition of the present invention is suitably used as a deep frying oil or fat composition because of its excellent heating resistance. Examples of the deep-fried foods to be cooked include tempura, croquettes, pork cutlets, karaage, deep-fried fish, fried potatoes, deep-fried tofu, fried rice crackers, fried snacks typified by chips and puffs, donuts, churros and other fried bread, instant noodles, and pre-cooked foods.

### Examples

The present invention will be described in more detail by examples and comparative examples. The scope of the present invention, however, is not limited to these examples.

### Preparation Examples 1 to 3

In Preparation Examples 1 to 3 below, an oil or fat as the component (I) was prepared and the physical properties thereof were measured.

### Preparation Example 1

### 1. Preparation of palm-based fractionated oil or fat

The following raw material was subjected to fractionation in a pilot fractionation unit (Laboratory scale pilot fractionation; 10-kg batch) manufactured by De Smet. Palm super stearin with an iodine value (hereinafter, also called IV) of 15 (manufactured by MEWAHOLEO INDUSTRIES SDN. BHD.) as a raw material was thoroughly melted at 70°C, and then the temperature of the water was gradually lowered to 60°C. During crystallization, 2 ml of the slurry sample was taken and placed in a glass container, followed by measurement of the slurry SFC by an NMR analyzer (NMS120 minispec manufactured by Bruker Corporation). When the slurry SFC reached 0.2%, the slurry was transferred to the Laboratory scale filter, followed by pressurization to 15 bar for filtration, thereby giving a hard part. The hard part yield determined by calculating (weight of hard part)/(weight of hard part + weight of liquid part) was 1.4 wt% (Table 2). The fractionation efficiency determined by calculating (yield of hard part)/(slurry SFC) was 7 (Table 2).

### 2. Analysis of hard part composition

The triglyceride composition of the hard part was determined in conformance with A.O.C.S. Official Method Ce 5-86, as follows. First, a 10-mg sample of the hard part obtained above was taken and placed in a GC vial, to which 1 ml of hexane was added for thoroughly melting the sample. The resulting sample was analyzed on gas chromatography (GC) under the following measurement conditions.

### GC measurement conditions:

GC/FID; 6890 series GC System (manufactured by Agilent Technologies)
Column; CP-TAP CB for Triglycerides
25 m x 0.25 mm with film pressure of 0.1 µm (manufactured by Agilent Technologies) Temperature-raising conditions; 200°C (1 min) -> (5°C/min) -> 350°C (10 min)
Inlet temperature; 350°C
Detector temperature; 365°C
Carrier gas; He gas
Carrier gas flow rate; 1.7 ml/min
Makeup gas flow rate; 40 ml/min
Hydrogen gas flow rate; 30 ml/min
Air flow rate; 400 ml/min
Split ratio; 1:50
Injection volume; 1 µl

The content of unsaturated fatty acids (18:1 + 18:2 + 18:3) that were constituent fatty acids was also determined in conformance with A.O.C.S. Official Method Ce 1h-05(2005). GC analysis gave the ratio of the content of tripalmitin, as determined by calculating tripalmitin/triglyceride, as 73.5 wt% (Table 2). The ratio of the content of unsaturated fatty acids as determined by calculating (unsaturated fatty acids (18:1 + 18:2 + 18:3))/(total content of all of fatty acids) was 6.9 wt% (Table 2), the triglyceride containing unsaturated fatty acid content as determined by calculating (triglyceride containing unsaturated fatty acid)/triglyceride was 15.0 wt% (Table 2), and the ratio of the content of tripalmitin relative to the content of tri-saturated fatty acid triglyceride was 86.6 wt% (Table 2).

### Preparation Example 2

Palm super stearin of IV 12 (manufactured by MEWAHOLEO INDUSTRIES SDN. BHD.) was thoroughly melted at 70°C, and then the temperature of the water was gradually lowered to 60°C. When the slurry SFC reached 0.3%, the slurry was transferred to the Laboratory scale filter for filtration. Pressurization to 15 bar gave a hard part. The hard part was to serve as a palm-based fractionated oil or fat of the present invention. In the same manner as in Preparation Example 1, the hard part yield, the fractionation efficiency, the hard part composition (the tripalmitin content, the unsaturated fatty acid content, the triglyceride containing unsaturated fatty acid content, and the tripalmitin content relative to tri-saturated fatty acid triglyceride) were determined. The results are shown in Table 2.

### Preparation Example 3

Palm super stearin of IV 12 (manufactured by MEWAHOLEO INDUSTRIES SDN. BHD.) was thoroughly melted at 70°C, and then the temperature of the water was gradually lowered to 60°C. When the slurry SFC reached 0.5%, the slurry was transferred to the Laboratory scale filter for filtration. Pressurization to 15 bar gave a hard part shown in Table 2. The hard part was to serve as a palm-based fractionated oil or fat of the present invention. In the same manner as in Preparation Example 1, the hard part yield, the fractionation efficiency, and the hard part composition were determined. The results are shown in Table 2.

### Preparation Example 4

Palm super stearin of IV 12 (manufactured by MEWAHOLEO INDUSTRIES SDN. BHD.) was thoroughly melted at 70°C, and then the temperature of the water was gradually lowered to 60°C. When the slurry SFC reached 0.4%, the slurry was transferred to the Laboratory scale filter for filtration. Pressurization to 15 bar gave a hard part shown in Table 2. The hard part was to serve as a palm-based fractionated oil or fat of the present invention. In the same manner as in Preparation Example 1, the hard part yield, the fractionation efficiency, and the hard part composition were determined. The results are shown in Table 2.

### Reference Example 1

For comparison, palm super stearin of IV 12 (manufactured by MEWAHOLEO INDUSTRIES SDN. BHD.) was used. The composition thereof is shown in Table 2.

### Reference Example 2

For comparison, palm super stearin of IV 15 (manufactured by MEWAHOLEO INDUSTRIES SDN. BHD.) was used. The composition thereof is shown in Table 2.

**Table 2**

| | Raw material | Fractionation | | | Composition of palm-based fractionated oil or fat (hard part after fractionation) | | | |
|---|---|---|---|---|---|---|---|---|
| | | Slurry SFC ¹⁾ (wt%) | Hard part yield ²⁾ (wt%) | Fractionation efficiency ³⁾ | Ratio of content of tripalmitin ⁴⁾ (wt%) | Ratio of content of unsaturate d fatty acids ⁵⁾ (wt%) | Ratio of content of triglyceride containing unsaturate d fatty acid ⁶⁾ (wt%) | Ratio of content of tripalmitin relative to content of tri-saturated fatty acid triglyceride ⁷⁾ (wt%) |
| Preparation Example 1 | Palm super stearin (IV 15) | 0.2 | 1.4 | 7 | 73.5 | 6.9 | 15.0 | 86.6 |
| Preparation Example 2 | Palm super stearin (IV 12) | 0.3 | 5.5 | 18 | 77.0 | 7.5 | 11.0 | 86.8 |
| Preparation Example 3 | Palm super stearin (IV 12) | 0.5 | 4.1 | 8 | 84.8 | 2.8 | 5.2 | 89.5 |
| Preparation Example 4 | Palm super stearin (IV 12) | 0.4 | 2.4 | 6 | 84.3 | 4.2 | 5.9 | 89.3 |
| Reference Example 1 | Palm super stearin (IV 12) | - | - | - | 67.5 | 11.6 | 19.5 | 84.1 |
| Reference Example 2 | Palm super stearin (IV 15) | - | - | - | 60.5 | 13.7 | 23.7 | 79.9 |

| | | | | | | | | |
|---|---|---|---|---|---|---|---|---|
| 1) Slurry SFC = weight of solid fat/weight of oil or fat slurry x 100 (wt%) 2) Hard part yield = weight of hard part/(weight of hard part + weight of liquid part) x 100 (wt%) 3) Fractionation efficiency = hard part yield/slurry SFC 4) Ratio of content of tripalmitin = weight of tripalmitin/weight of triglyceride x 100 (wt%) 5) Ratio of content of unsaturated fatty acids = weight of unsaturated fatty acids (18:1 + 18:2 + 18:3)/the total weight of all of fatty acids x 100 (wt%) 6) Ratio of content of triglyceride containing unsaturated fatty acid = weight of triglyceride containing unsaturated fatty acid/weight of triglyceride x 100 (wt%) 7) Ratio of content of tripalmitin relative to content of tri-saturated fatty acid triglyceride = weight of tripalmitin/weight of tri-saturated fatty acid triglyceride x 100 (wt%) | | | | | | | | |

### Examples 1 to 3

An oil or fat composition of the present invention was prepared using a palm-based fractionated oil or fat resulting from each preparation example as the component (I) and rape seed oil as the component (II), followed by evaluation of the heating resistance.

### 1. Preparation of oil or fat composition

A component (I) and a component (II) each at the predetermined content shown in Table 3 were mixed to give an oil or fat composition. For comparison, rape seed oil to which no component (I) was added (Comparative Example 1) and rape seed oil to which palm super stearin shown in either of Reference Examples 1 and 2 were added (compositions of Comparative Examples 2 and 3) were also prepared.

### 2. Test for evaluating heating resistance

The oil or fat composition was subjected to a test for evaluating heating resistance by means of a simplified heating test, as follows. First, an oil bath was filled with silicone oil (KF-968-100CS manufactured by Shin-Etsu Chemical Co., Ltd.), and was then warmed to 190°C. A test tube (18 mm x 165 mm) containing 10 g of a sample was placed in a test tube rack (5 x 5) for immersion in the silicone bath, followed by heating at 190°C for 70 hours. The color tone and the acid value of the oil were measured after 0 hour and 70 hours at 190°C. The color tone was measured with a Lovibond colorimeter (manufactured by THE TINTOMETER LTD., TINTOMETER MODEL E) using a 25.4-mm cell, and the 10R+Y level was determined by calculation. The acid value as the amount (mg) of potassium hydroxide for neutralizing the free fatty acids contained in 1 g of the sample was measured in conformance with Standard Methods for the Analysis of Fats, Oils and Related Materials 2.3.1-1996. The results are shown in Table 3.

**Table 3**

| | Composition of oil or fat composition | | | | Physical properties of oil or fat composition | | | |
|---|---|---|---|---|---|---|---|---|
| | (II) Base oil | Ratio | (I) Palm-based fractionated oil or fat | Ratio | Acid value ¹⁾ | | Color tone ²⁾ | |
| | | | | | Before heating | 70 hr | Before heating | 70 hr |
| Comparative Example 1 | Rape seed oil ³⁾ | 100 | - | 0 | 0.06 | 1.89 | 4.1 | 88 |
| Comparative Example 2 | Rape seed oil | 95 | Oil or fat of Reference Example 1 | 5 | 0.06 | 1.36 | 4.2 | 110 |
| Comparative Example 3 | Rape seed oil | 95 | Oil or fat of Reference Example 2 | 5 | 0.06 | 1.54 | 4.2 | 98 |
| Example 1 | Rape seed oil | 95 | Oil or fat of Preparation Example 1 | 5 | 0.12 | 0.38 | 4.2 | 37 |
| Example 2 | Rape seed oil | 95 | Oil or fat of Preparation Example 2 | 5 | 0.06 | 0.62 | 3.1 | 48 |
| Example 3 | Rape seed oil | 95 | Oil or fat of Preparation Example 3 | 5 | 0.06 | 0.38 | 5.2 | 21 |

| | | | | | | | | |
|---|---|---|---|---|---|---|---|---|
| 1) Acid value: acid value before heating or after 190°C x 70 hr 2) Color tone: chromaticity 10R+Y before heating or after 190°C x 70 hr 3) Rape seed oil: manufactured by J-Oil Mills, Inc. | | | | | | | | |

As shown in Table 2, the oil or fat compositions of the present invention in each of which the palm-based fractionated oil or fat obtained in each of Preparation Examples 1 to 3 was added to a base oil in a proportion of 5% had acid values and color tones, before heating, that were almost the same as the acid value and the color tone of the base oil to which no palm-based fractionated oil or fat was added.

Figs. 1 and 2 show the acid values and the color tones of the oil or fat compositions after maintained at 190°C for 70 hours, for comparison. Compared to the case of the base oil, elevation in the acid values and discoloration of the oil or fat compositions of the present invention after maintained at 190°C for 70 hours were remarkably inhibited. Heating resistance that is retained for such an extended period of time is a significantly advantageous property of a deep frying oil or fat composition either for commercial use or for household use.

Fig. 1 shows that elevation in the acid values of the oil or fat compositions containing a palm-based oil or fat outside the scope of the present invention (Comparative Examples 2 and 3) was inhibited to a greater extent than in the case of the base oil alone but to a lesser extent than in the cases of the oil or fat compositions of the present invention. The oil or fat compositions of Comparative Examples 2 and 3 underwent significant heat discoloration compared to the base oil alone of Comparative Example 1 (Fig. 2). Thus, the compositions of the present invention of Examples 1 to 3 had both the acid values and the heat discoloration remarkably inhibited and therefore were excellent overall compared to the compositions of Comparative Examples 2 and 3.

### Examples 4 to 10

An oil or fat composition of the present invention having a different ratio of the component (I) was prepared, and the heating resistance was evaluated.

### 1. Preparation of oil or fat composition

An oil or fat composition was prepared in the same manner as in Example 2 except that the content of the component (I) was changed as shown in Table 4.

### 2. Test for evaluating heating resistance

The oil or fat composition was subjected to a test for evaluating heating resistance in the same manner as in Example 1 by a simplified heating test. The results are shown in Table 4.

**Table 4**

| | Composition of oil or fat composition | | | | Physical properties of oil or fat composition | | | |
|---|---|---|---|---|---|---|---|---|
| | (II) Base oil | Ratio | (I) Palm-based fractionated oil or fat | Ratio | Acid value ¹⁾ | | Color tone ²⁾ | |
| | | | | | Before heating | 70 hr | Before heating | 70 hr |
| Comparative Example 1 | Rape seed oil | 100 | - | 0 | 0.06 | 1.89 | 4.1 | 88 |
| Example 4 | Rape seed oil | 99.9 | Oil or fat of Preparation Example 2 | 0.1 | 0.06 | 1.53 | Not measu red | 100 |
| Example 5 | Rape seed oil | 99.7 | Oil or fat of Preparation Example 2 | 0.3 | 0.08 | 1.48 | 3.0 | 102 |
| Example 6 | Rape seed oil | 99.5 | Oil or fat of Preparation Example 2 | 0.5 | 0.08 | 1.37 | Not measu red | 102 |
| Example 7 | Rape seed oil | 99.0 | Oil or fat of Preparation Example 2 | 1.0 | 0.06 | 1.27 | 3.0 | 98 |
| Example 8 | Rape seed oil | 97.0 | Oil or fat of Preparation Example 2 | 3.0 | 0.06 | 1.28 | 3.0 | 97 |
| Example 2 | Rape seed oil | 95.0 | Oil or fat of Preparation Example 2 | 5.0 | 0.06 | 0.62 | 3.1 | 48 |
| Example 9 | Rape seed oil | 90 | Oil or fat of Preparation Example 2 | 10 | 0.06 | 0.41 | 4.2 | 43 |
| Example 10 | Rape seed oil | 85 | Oil or fat of Preparation Example 2 | 15 | 0.06 | 0.46 | Not measu red | 50 |

| | | | | | | | | |
|---|---|---|---|---|---|---|---|---|
| 1) Acid value: acid value before heating or after 190°C x 70 hr 2) Color tone: chromaticity 10R+Y before heating or after 190°C x 70 hr | | | | | | | | |

Fig. 3 is a graph showing a correlation between the ratio of the component (I) (abscissa) and the acid values (left ordinate) or the color tones (right ordinate) of the oil or fat compositions after maintained at 190°C for 70 hours. Elevation in the acid values of the oil or fat compositions containing rape seed oil as the base oil was inhibited by addition of not lower than 0.1 wt% of the component (I) and was remarkably inhibited by addition of more than 3 wt% of the component (I). When more than 3% of the component (I) was added, heat discoloration was remarkable. This indicates that the oil or fat compositions of the present invention containing rape seed oil as the base oil with the content of the component (II) ranging from not lower than 0.05 wt% to not higher than 15 wt% exhibited heating resistance at least in a way that elevation in the acid value was inhibited and, particularly when the content of the component (II) exceeded 3 wt% but was not higher than 15 wt%, exhibited excellent heating resistance in a way that both the elevation in the acid value and the heat discoloration were inhibited.

### Examples 11 to 13

An oil or fat composition of the present invention containing a different base oil as the component (II) was prepared, and the heating resistance was evaluated.

### 1. Preparation of oil or fat composition

An oil or fat composition containing the kinds and the contents of the components (I) and (II) was prepared. The raw oils or fats used were as follows.
Rape seed oil: melting point not higher than 5°C, manufactured by J-Oil Mills, Inc.
Soybean oil: melting point not higher than 5°C, manufactured by J-Oil Mills, Inc.
Palm olein: IV 67, melting point of 8.4°C, manufactured by J-Oil Mills, Inc.
Mixed oil: mixed oil of the rape seed oil, the soybean oil, and the palm olein at 30:30:40

### 2. Test for evaluating heating resistance

### (1) Simplified heating test

The oil or fat composition was subjected to a test for evaluating heating resistance in the same manner as in Example 1 by a simplified heating test. The results are shown in Table 5. Fig. 4 and Fig. 5 are graphs showing the acid values and the color tones of the oil or fat compositions of the present invention and the base oils to which no component (I) was added, after maintained at 190°C for 70 hours, for comparison.

**Table 5**

| | Composition of oil or fat composition | | | | Physical properties of oil or fat composition | | | |
|---|---|---|---|---|---|---|---|---|
| | (II) Base oil | Ratio | (I) Palm-based fractionated oil or fat | Ratio | Acid value ¹⁾ | | Color tone ²⁾ | |
| | | | | | Before heating | 70 hr | Before heating | 70 hr |
| Comparative Example 1 | Rape seed oil | 100 | - | 0 | 0.06 | 1.89 | 4.1 | 88 |
| Example 8 | Rape seed oil | 97.0 | Oil or fat of Preparation Example 2 | 3.0 | 0.06 | 1.28 | 3.0 | 97 |
| Comparative Example 4 | Soybea n oil | 100 | - | 0 | 0.05 | 1.08 | 2.8 | 60 |
| Example 11 | Soybea n oil | 97.0 | Oil or fat of Preparation Example 2 | 3.0 | 0.05 | 0.55 | 2.9 | 54 |
| Comparative Example 5 | Palm olein | 100 | - | 0 | 0.05 | 2.60 | 6.9 | 127 |
| Example 12 | Palm olein | 97.0 | Oil or fat of Preparation Example 2 | 3.0 | 0.06 | 1.71 | 8.0 | 85 |
| Comparative Example 6 | Mixed oil | 100 | - | 0 | 0.05 | 1.94 | 4.3 | 94 |
| Example 13 | Mixed oil | 97.0 | Oil or fat of Preparation Example 2 | 3.0 | 0.06 | 1.06 | 5.3 | 76 |

| | | | | | | | | |
|---|---|---|---|---|---|---|---|---|
| 1) Acid value: acid value before heating or after 190°C x 70 hr 2) Color tone: chromaticity 10R+Y before heating or after 190°C x 70 hr | | | | | | | | |

Table 5 and Figs. 4 and 5 indicate that the oil or fat compositions of the present invention in each of which the component (II) was changed from rape seed oil to soybean oil, to palm olein having a melting point of 8.4°C, or to a mixed oil of rape seed oil, soybean oil, and the palm olein still exhibited heating resistance. In addition, heat discoloration of the oil or fat compositions containing soybean oil, the palm olein, or a mixed oil of rape seed oil, soybean oil, and the palm olein as the base oil was significantly inhibited even when the content of the component (I) was 3%.

### (2) Heating test on ceramic dish

An oil or fat composition in which the oil or fat of Preparation Example 2 was added to rape seed oil in a proportion of 3% (Example 8) and rape seed oil to which the oil or fat of Preparation Example 2 was not added (Comparative Example 1) were subjected to a heating resistance test on a ceramic dish, as follows. In a ceramic dish of ϕ 18 cm, 400 g of the rape seed oil or the oil or fat composition of Example 8 was placed, followed by heating to 190°C. The temperature was allowed to reach 190°C, which was maintained for 28 hours. While the temperature was maintained, a sample of the oil was subjected to evaluation of the acid value and the color tone (by the Lovibond scale using a 133.4-mm cell). The results are shown in Figs. 6 and 7, which indicate that the test on a ceramic dish exhibits the same behavior as observed in a simplified heating test.

### Example 14 Deep-frying test

The oil or fat composition of the present invention was used for deep frying food ingredients to evaluate the resulting food. Specific procedure of the test was as follows.

An oil or fat composition in which the proportion of the oil or fat of Preparation Example 4 to rape seed oil was 3% (Example 14) was prepared. For comparison purpose, rape seed oil (Comparative Example 1) was also used.

In a pan, 500 g of the oil or fat composition was placed, followed by heating to 190°C to deep fry a frozen croquette (trade name: frozen croquette, manufactured by Kobe Bussan Co., Ltd.). The resulting food was evaluated by a panel of specialists for its flavor and taste. The results indicated no difference in the flavor and taste between Example 14 and Comparative Example 1. This proved that the oil or fat composition of the present invention had no adverse influence on the quality of food.

## Claims

1. An oil or fat composition comprising:
(I) a palm-based fractionated oil or fat in which the ratio of the content of tripalmitin relative to the content of triglyceride is 70 to 90 wt%,
the ratio of the content of unsaturated fatty acids relative to the total content of all of fatty acids is 1 to 8 wt%, and
the ratio of the content of tripalmitin relative to the content of tri-saturated fatty acid triglyceride is 84 to 95 wt%, and
(II) a base oil having a melting point lower than 10°C,
wherein the content of the component (I) relative to the whole weight of the oil or fat composition is 0.05 to 15 wt%, and
the content of the component (II) relative to the whole weight of the oil or fat composition is 85 to 99.95 wt%.

2. The oil or fat composition according to claim 1, wherein the triglyceride containing unsaturated fatty acid content to triglyceride in the component (I) is 0.5 to 18 wt%.

3. The oil or fat composition according to claim 1, wherein the component (I) consists of a hard part obtained by subjecting a palm fractionated hard part in slurry form to fractionation by crystallization at a hard part yield of not higher than 26 wt%.

4. The oil or fat composition according to claim 3, wherein the palm fractionated hard part is palm super stearin with an iodine value of 10 to 17.

5. The oil or fat composition according to claim 3, wherein the crystallization in fractionation gives a slurry SFC of not higher than 20 wt%.

6. The oil or fat composition according to claim 3, wherein the fractionation gives a ratio of hard part yield/slurry SFC of not higher than 20.

7. The oil or fat composition according to claim 1, wherein the base oil as the component (II) consists of at least one selected from a group consisting of rape seed oil, soybean oil, and a palm-based oil or fat having a melting point lower than 10°C.

8. A method for producing an oil or fat composition, comprising the step of adding, to (II) a base oil having a melting point lower than 10°C, 0.05 to 15 wt% of (I) a palm-based fractionated oil or fat in which the ratio of the content of tripalmitin relative to the content of triglyceride is 70 to 90 wt%,
the ratio of the content of unsaturated fatty acids relative to the total content of all of fatty acids is 1 to 8 wt%, and
the ratio of the content of tripalmitin relative to the content of tri-saturated fatty acid triglyceride is 84 to 95 wt%.

9. A method for inhibiting elevation in an acid value of an oil or fat composition, comprising the step of adding, to (II) a base oil having a melting point lower than 10°C, 0.05 to 15 wt% of (I) a palm-based fractionated oil or fat in which the ratio of the content of tripalmitin relative to the content of triglyceride is 70 to 90 wt%,
the ratio of the content of unsaturated fatty acids relative to the total content of all of fatty acids is 1 to 8 wt%, and
the ratio of the content of tripalmitin relative to the content of tri-saturated fatty acid triglyceride is 84 to 95 wt%.

10. A method for inhibiting heat discoloration of an oil or fat composition, comprising the step of adding, to (II) a base oil having a melting point lower than 10°C, 0.05 to 15 wt% of (I) a palm-based fractionated oil or fat in which the ratio of the content of tripalmitin relative to the content of triglyceride is 70 to 90 wt%,
the ratio of the content of unsaturated fatty acids relative to the total content of all of fatty acids is 1 to 8 wt%, and
the ratio of the content of tripalmitin relative to the content of tri-saturated fatty acid triglyceride is 84 to 95 wt%,
under a condition that the content of the component (I) is larger than 3 wt% in the case where the component (II) consists of rape seed oil.
